# EUROPEAN PATENT SPECIFICATION

(11) **EP 1 268 656 B1**
(45) Date of publication and mention of the grant of the patent: **25.05.2005**
(21) Application number: 00986634.4
(22) Date of filing: 20.12.2000
(51) Int. Cl.: C08L 23/10, C08K 9/04, C08L 51/06

(54) **THERMOPLASTIC OLEFIN NANOCOMPOSITE BASED ON POLYPROPYLENE AND PROCESS FOR PRODUCTION THEREOF**
THERMOPLASTISCHES NANOKOMPOSIT AUF BASIS VON POLYPROPYLEN UND DESSEN HERSTELLUNG
NANOCOMPOSITE OLEFINIQUE THERMOPLASTIQUE A BASE DE POLYPROPYLENE ET SA PREPARATION

(30) Priority: 29.12.1999 US 173608 P
(43) Date of publication of application: 02.01.2003
(73) Proprietor: Dow Global Technologies, Inc., Midland, Michigan 48674 (US)
(72) Inventor: CHOU, Chai-Jing, Missouri, TX 77459 (US); GARCIA-MEITIN, Eddy, I., Angleton, TX 77515 (US); SCHILHAB, Lonnie, Lake Jackson, TX 77566 (US); FIBIGER, Richard, F., Midland, MI 48642 (US)
(74) Representative: Raynor, John
(86) International application number: PCT/US2000/034707
(87) International publication number: WO 2001/048080

(56) References cited:
- WO-A-00/47657
- US-A- 4 891 399
- US-A- 5 910 523
- KUROKAWA Y ET AL: "STRUCTURE AND PROPERTIES OF A MONTMORILLONITE/POLYPROPYLENE NANOCOMPOSITE" JOURNAL OF MATERIALS SCIENCE LETTERS,GB,CHAPMAN AND HALL LTD. LONDON, vol. 16, no. 20, 15 October 1997 (1997-10-15), pages 1670-1672, XP000784261 ISSN: 0261-8028
- ALEXANDRE M ET AL: "Polymer-layered silicate nanocomposites: preparation, properties and uses of a new class of materials" MATERIALS SCIENCE AND ENGINEERING R: REPORTS,CH,ELSEVIER SEQUOIA S.A., LAUSANNE, vol. 28, no. 1-2, June 2000 (2000-06), pages 1-63, XP004205143 ISSN: 0927-796X

## Description

### BACKGROUND

This invention relates to thermoplastic polyolefin (TPO) incorporating polypropylene reinforced with delaminated or exfoliated cation-exchanging multi-layered silicates.

In their natural state, the layers of cation-exchanging multi-layered silicates, such as montmorillonite, are held together by ionic bonds to the exchangable cations. As discussed by Kawasumi et al. in Macromolecules, 1997, 6333-6338, when such silicates are blended with softened or melted polypropylene, the resulting shear forces are not sufficient to delaminate or exfoliate the silicate layers even when the cation is a quaternary ammonium ion because polypropylene is a relatively non-polar material.

Usuki et al., United States Patent 5,973,053, solved this problem using two related approaches. The first approach (also described by Kawasumi et al.) was to blend a quaternary ammonium exchanged multi-layered silicate with a maleic anhydride modified polypropylene oligomer and then add an unmodified polypropylene polymer. The maleic anhydride modified polypropylene oligomer had sufficient polarity to exfoliate the silicate under the shear conditions of the blending process.

The second approach of Usuki et al. was to blend a quaternary ammonium exchanged multi-layered silicate with a maleic anhydride modified polypropylene polymer. The maleic anhydride modified polypropylene polymer had sufficient polarity to exfoliate the silicate under the shear conditions of the blending process.

Usuki et al. pointed out that when a maleic anhydride modified polypropylene oligmer was not used, then the average molecular weight of the maleic anhydride modified polypropylene polymer should be limited to about 100,000.

Thermoplastic olefin (TPO) is a mechanical blend of a polyolefin (such as polypropylene) and a thermoplastic elastomer (such as EPDM or ultra low density polyethylene). The use of polypropylene based TPO articles at a low temperature is limited because polypropylene based TPO has relatively poor low temperature impact toughness.

WO 00/47657 discloses dispersing a multi-layered silicate material in a polymer to produce a polymer having layers of silicate material.

### SUMMARY OF THE INVENTION

The instant invention provides a. polypropylene based TPO nanocomposite with a significantly increased low temperature impact toughness. Suprisingly, the key to achieving such toughness is the use of maleated polypropylene polymer having a molecular weight greater than 100,000.

More specifically, the instant invention is a thermoplastic olefin nanocomposite composition, comprising: a maleated polypropylene polymer phase having a weight average molecular weight greater than 100,000; a cation exchanging layered silicate material dispersed in the maleated polypropylene phase so that more than one half of the cation exchanging layered silicate material is present as one, two, three, four or five layer units upon examination by electron microscopy; and a thermoplastic elastomer phase interdispersed with the maleated polypropylene phase.

More generally, the instant invention is a polypropylene nanocomposite composition, comprising: a maleated polypropylene polymer having a weight average molecular weight greater than 100,000; and a cation exchanging layered silicate material dispersed in the maleated polypropylene phase so that more than one half of the cation exchanging layered silicate material is present as one, two, three, four or five layer units upon examination by electron microscopy.

An article of manufacture comprising an object formed of a composition comprising: a maleated polypropylene polymer phase having a weight average molecular weight greater than 100,000; a cation exchanging layered silicate material dispersed in the maleated polypropylene phase so that more than one half of the cation exchanging layered silicate material is present as one, two, three, four or five layer units upon examination by electron microscopy; and a thermoplastic elastomer phase interdispersed with the maleated polypropylene phase.

An article of manufacture comprising an object formed of a composition comprising: a maleated polypropylene polymer having a weight average molecular weight greater than 100,000; and a cation exchanging layered silicate material dispersed in the maleated polypropylene so that more than one half of the cation exchanging layered silicate material is present as one, two, three, four or five layer units upon examination by electron microscopy.

A process for producing a thermoplastic olefin nanocomposite composition, comprising the steps of: mixing a softened or melted polypropylene polymer with an organic peroxide and maleic anhydride to form a maleated polypropylene polymer; mixing the maleated polypropylene polymer with an onium treated cation exchanging layered silicate material to form a maleated polypropylene nanocomposite; and mixing the maleated polypropylene nancomposiite with a thermoplastic elastomer, the process characterized by the maleated polypropylene having a weight average molecular weight greater than 100,000.

A process for producing a polypropylene nanocomposite composition, comprising the steps of: mixing a softened or melted polypropylene polymer with an organic peroxide and maleic anhydride to form a maleated polypropylene polymer; and mixing the maleated polypropylene polymer with an onium treated cation exchanging layered silicate material to form a maleated polypropylene nanocomposite, the process characterized by the maleated polypropylene having a weight average molecular weight greater than 100,000.

### BRIEF DESCRIPTION OF THE DRAWING

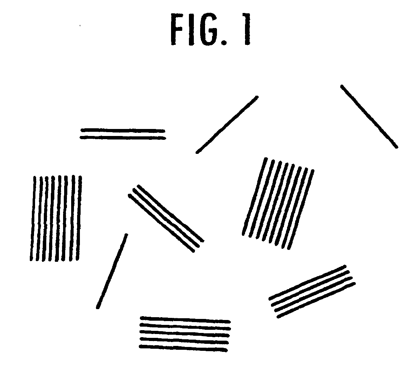

Fig. 1 is an idealized drawing made from an electron photomicrographic examination of the maleated polypropylene phase of a TPO composition of the instant invention showing more than one half of the cation exchanging layered silicate material being present as one, two, three, four or five layer units.

### DETAILED DESCRIPTION OF THE INVENTION

The thermoplastic olefin (TPO) nanocomposite of the instant invention comprises a maleated polypropylene polymer phase having a weight average molecular weight greater than 100,000, a cation exchanging layered silicate material dispersed in the maleated polypropylene so that more than one half of the cation exchanging layered silicate material is present as one, two, three, four or five layer units upon examination by electron microscopy (and most preferably, more than one half of the material is so apparent as one, two or three layer units) and a thermoplastic elastomer phase interdispersed with the maleated polypropylene phase. Suprisingly, the weight average molecular weight of the maleated polypropylene polymer can be significantly greater than 100,000, for example, it can be greater than 150,000 or even greater than 250,000.

Referring now to Fig. 1, therein is shown a drawing reproduction of an electron photomicrograph of the maleated polypropylene polymer phase of a TPO composition of the instant invention. The layered silicate material is shown delaminated or exfoliated as: three single layer units, one two layer unit, one three layer unit, one four layer unit, one five layer unit and two eight layer units. A one layer unit typically is a platlet 1-10 nanometers thick and 100-1000 nanometers wide.

The term "weight average molecular weight" is well known in the instant art and can be determined by, for example, gel permeation chromatography. The term "cation exchanging layered silicate material" is well known in the instant art and includes the "clay mineral" of United States Patent 5,973,053. Examples of cation exchanging layered silicate materials include:
1) biophilite, kaolinite, dickalite or talc clays,
2) smectite clays,
3) vermiculite clays,
4) mica,
5) brittle mica,
6) Magadiite
7) Kenyaite,
8) Octosilicate,
9) Kanemite,
10) Makatite, and
11) Zeolitic layered materials such as ITQ-2, MCM-22 precursor, exfoliated ferrierite and exfoliated mordenite.

Many of the above clay materials exist in nature, and also can be synthesized, generally in higher purity than the native material. Any of the naturally occurring or synthetic cation exchanging layered silicate clay materials may be used in the present invention. Preferred are smectite clays, including montmorillonite, bidelite, saponite and hectorite.

An "onium treated cation exchanging layered silicate material" is a cation exchanging layered silicate material that has been exposed to onium cations (usually oranic quaternary ammonium compounds) so that the original cation of the cation exchanging layered silicate material is exchanged, at least in part, for the onium cations.

Onium treated cation exchanging layered silicate materials are well known in the instant art, for example, see the above mentioned United States Patent 5,973,053. Onium treated cation exchanging layered silicate materials are commercially available from, for example, Southern Clay Company in the United States.

The term "maleated polypropylene" means a polypropylene containing more than one tenth of one percent of maleic anhydride grafted to the polypropylene. Maleated polypropylene is commercially available from several sources. Polymer synthesis may be the best way to tailor the molecular weight, molecular weight distribution and the extent of maleic anhydride grafting to the polymer. Solid state maleation in a solution at a temperature below the melting temperature of the polypropylene is another way of preparing maleated polypropylene. Alternatively, as is well known in the instant art, maleated polypropylene can be made by mixing softened or melted unmodified polypropylene with maleic anhydride and an organic peroxide.

Preferably, the weight percent of maleic anhydride of the maleated polypropylene is in the range of from two tenths of one percent to ten percent. Most preferably, the weight percent of maleic anhydride of the maleated polypropylene is in the range of from one half of one percent to two percent.

The amount of cation exchanging layered silicate material used can range from one to fifty percent by weight of the composition. Preferably, the cation exchanging layered silicte material in the composition is more than one percent and less than thirty percent. More preferably, the amount of cation exchanging layered silicate material used ranges from three to twelve percent by weight of the composition. The polypropylene nanocomposite composition of the instant invention is obtained when the above discussed thermoplastic elastomer is not used.

The TPO nanocomposite or polypropylene nanocomposite of the instant invention can also contain conventional macro sized fillers such as a carbonate, glass fibers, kaolin, talc, glass beads, graphite fibers and carbon black. The maleated polypropylene of the instant invention can be high crystallinity maleated polypropylene. The term "high crystallinity" is defined herein as material which has a heat of melting of the maleated polypropylene crystallites of more than 85 Joules per gram of amorphous and crystalline phases of the polymer using the determination outlined on pages 448-494 of Volume 4 of the Encyclopedia of Polymer Science and Engineering, 2^{nd} Edition, 1986, John Wiley & Sons.

The TPO nanocomposite or polypropylene nanocomposite of the instant invention can also comprise non-maleated polypropylene having a weight average molecular weight greater than 100,000. Preferably, the non-maleated polypropylene is high crystallinity non-maleated polypropylene, wherein the heat of melting of the non-maleated polypropylene crystallites is greater than 85 Joules per gram. Preferably, the TPO nanocomposite or polypropylene nanocomposite of the instant invention is essentially free of maleated polypropylene oligomer, that is, the concentration of maleated polypropylene oligomer is less than five percent of the total amount of polypropylene. The term "oligomer" herein means a polymer having a molecular weight of less than one thousand. The non-maleated polypropylene can be any type of polypropylene, for example, block co-polymers of polypropylene and ethylene.

The TPO nanocomposite of the instant invention can be made by mixing a heat softened or melted polypropylene polymer of sufficiently high molecular weight with an organic peroxide and maleic anhydride to form a maleated polypropylene polymer which can then mixed with an onium treated cation exchanging layered silicate material and a thermoplastic elastomer.

Preferably, the impact toughness at zero degrees Celsius by the notched IZOD test of the composition is increased by more than fifty percent in comparison to a composition being the same except that the weight average molecular weight of the maleated polypropylene polymer is less than 100,000.

Another way of making the TPO nanocomposite of the instant invention is to mix a heat softened or melted polypropylene polymer of sufficiently high molecular weight with an organic peroxide and maleic anhydride to form a maleated polypropylene polymer; then mix the maleated polypropylene polymer with an onium treated cation exchanging layered silicate material and then to mix in the thermoplastic elastomer.

Similarly, the polypropylene nanocomposite of the instant invention can be made by mixing a heat softened or melted polypropylene polymer of sufficiently high molecular weight with an organic peroxide and maleic anhydride to form a maleated polypropylene polymer which can then mixed with an onium treated cation exchanging layered silicate material.

The TPO nanocomposite or polypropylene nanocomposite of the instant invention can be used, for example, to make articles of manufacture such as parts for motor vehicles, appliances, business machines or construction articles.

### COMPARATIVE EXAMPLE

Fifty seven parts by weight of maleated polypropylene having a weight average molecular weight of 50,000 (PP EPOLENE® G3003 brand maleated polypropylene from Eastern Chemical Company), thirty three parts by weight of thermoplastic elastomer (AFFINITY® 8180 brand low density polyethylene from Dow) and ten parts by weight onium treated cation exchanging layered silicate material (montmorillonite treated with dimethyl, dihydrogenated tallow quaternary ammonium compound from Southern Clay) are mixed in a BANBURY brand polymer mixer at 100 rpm and a temperature of 150 degrees Celsius for ten minutes to produce a thermoplastic olefin nanocomposite having a flex modulus of 207,000 pounds per square inch (1430 MPa) and a notched IZOD impact strength at 30 degrees below zero Centigrade of 1 foot pound per inch (53.5 J/m).

### EXAMPLE 1

Fifty seven parts by weight of maleated polypropylene having a weight average molecular weight of 150,000 (laboratory prepared by mixing ninety five parts high molecular weight polypropylene with three parts of maleic anhydride and six tenths part di-cumyl peroxide in a BANBURY® brand polymer mixer at 200 rpm and 180-200 degrees Celsius for three minutes), thirty three parts by weight of thermoplastic elastomer (AFFINITY® 8180 brand low density polyethylene from Dow) and ten parts by weight onium treated cation exchanging layered silicate material (montmorillonite treated with dimethyl, dihydrogenated tallow quaternary ammonium compound from Southern Clay) are mixed in a BANBURY® brand polymer mixer at 100 rpm and a temperature of 150 degrees Celsius for ten minutes to produce a thermoplastic olefin nanocomposite having a flex modulus of 183,000 pounds per square inch (1260 MPa) and a notched IZOD impact strength at 30 degrees below zero Centigrade of 11.6 foot pound per inch (621 J/m). This example shows the substantial increase in impact strength of a thermoplastic olefin nanocomposite of the instant invention relative to the thermoplastic olefin nanocomposite of the COMPARATIVE EXAMPLE.

### EXAMPLE 2

Thirty parts by weight of maleated polypropylene having a weight average molecular weight of 200,000, twenty seven parts by weight of non-maleated polypropylene having a weight average molecular weight of 150,000, thirty three parts by weight of thermoplastic elastomer (AFFINITY® 8180 brand low density polyethylene from Dow) and ten parts by weight onium treated cation exchanging layered silicate material (montmorillonite treated with dimethyl, dihydrogenated tallow quaternary ammonium compound from Southern Clay) are mixed in a HAAKE brand polymer mixer at 200 rpm and a temperature of 180 degrees Celsius for ten minutes to produce a thermoplastic olefin nanocomposite. Electron microscopy examination of the polypropylene phase of the thermoplastic olefin nanocomposite shows that more than one half of the onium treated cation exchanging layered silicate material is apparent as single, double or triple layer units.

### EXAMPLE 3

Twenty three parts by weight of maleated polypropylene having a weight average molecular weight of 150,000, forty two parts by weight of non-maleated high crystallinity polypropylene having a weight average molecular weight of 150,000, twenty five parts by weight of thermoplastic elastomer (AFFINITY® 8180 brand low density polyethylene from Dow) and ten parts by weight onium treated cation exchanging layered silicate material (montmorillonite treated with dimethyl, dihydrogenated tallow quaternary ammonium compound from Southern Clay) are mixed in a BANBURY® brand polymer mixer at 100 rpm and a temperature of 150 degrees Celsius for ten minutes to produce a thermoplastic olefin nanocomposite having a flex modulus of 184,000 pounds per square inch (1270 MPa) and a notched IZOD impact strength at zero degrees Celsius of 13.7 foot pound per inch (733.5 J/m). Electron microscopy examination of the polyethylene phase of the thermoplastic olefin nanocomposite shows that more than one half of the onium treated cation exchanging layered silicate material is apparent as single, double or triple layer units.

### EXAMPLE 4

Twenty three parts by weight of maleated polypropylene having a weight average molecular weight of 150,000, forty two parts by weight of non-maleated high crystallinity polypropylene having a weight average molecular weight of 150,000, twenty five parts by weight of thermoplastic elastomer (AFFINITY® 8180 brand low density polyethylene from Dow), five parts by weight of talc and ten parts by weight onium treated cation exchanging layered silicate material (montmorillonite treated with dimethyl, dihydrogenated tallow quaternary ammonium compound from Southern Clay) are mixed in a BANBURY® brand polymer mixer at 100 rpm at a temperature of 150 degrees Celsius for ten minutes to produce a thermoplastic olefin nanocomposite having a flex modulus of 201,000 pounds per square inch (1390 MPa) and a notched IZOD impact strength at zero degrees Celsius of 12.7 foot pound per inch (680 J/m). Electron microscopy examination of the polyethylene phase of the thermoplastic olefin nanocomposite shows that more than one half of the onium treated cation exchanging layered silicate material is observed as single, double or triple layer units.

### EXAMPLE 5

Ninety parts by weight of maleated polypropylene having a weight average molecular weight of 200,000, ten parts by weight of onium treated cation exchanging layered silicate material (montmorillonite treated with dimethyl, dihydrogenated tallow quaternary ammonium compound from Southern Clay) and two tenths part by weight of IRGONOX® B225 brand antioxidant are mixed in a HAAKE brand polymer mixer at 200 rpm and a temperature of 180 degrees Celsius for ten minutes to produce a polypropylene nanocomposite. Electron microscopy examination of the polypropylene nanocomposite shows that more than one half of the onium treated cation exchanging layered silicate material is present as single, double or triple layer units.

## Claims

1. A polypropylene nanocomposite composition, comprising:
(a) maleated polypropylene polymer having a weight average molecular weight greater than 100,000;
(b) a cation exchanging layered silicate material dispersed in the maleated polypropylene so that more than one half of the cation exchanging layered silicate material is present as one, two, three, four or five layer units upon examination by electron microscopy.

2. The composition of Claim 1, wherein the weight percent of the cation exchanging layered silicate material in the composition is more than one percent and less than thirty percent.

3. The composition of Claim 1, wherein the weight percent of the cation exchanging layered silicate material in the composition is more than three percent of the composition and less than twelve percent of the composition.

4. The composition of Claims 1, 2 or 3, wherein the weight average molecular weight of the maleated polypropylene polymer is greater than 125,000.

5. The composition of Claims 1, 2 or 3, wherein the weight average molecular weight of the maleated polypropylene polymer is greater than 150,000.

6. The composition of Claims 1, 2 or 3, wherein the weight average molecular weight of the maleated polypropylene polymer is greater than 250,000.

7. The composition of Claims 1 to 6, wherein the maleated polypropylene polymer is high crystallinity maleated polypropylene, wherein the heat of melting of the crystallites of the maleated polypropylene polymer is greater than 85 Joules per gram.

8. The composition of Claims 1 to 7, further comprising non-maleated polypropylene in the maleated polyproyplene polymer, the non-maleated polypropylene having a weight average molecular weight greater than 100,000.

9. The composition of Claim 8, wherein the non-maleated polypropylene is high crystallinity non-maleated polypropylene, wherein the heat of melting of the non-maleated polypropylene crystallites is greater than 85 Joules per gram.

10. The composition of Claims 1 to 9, wherein the maleated polypropylene polymer phase is essentially free of a maleated polypropylene oligomer.

11. The composition of Claims 13-22, wherein the impact toughness at zero degrees Celsius by the notched IZOD test of the composition is increased by more than fifty percent in comparison to a composition being the same except that the weight average molecular weight of the maleated polypropylene polymer is less than 100,000.

12. The composition of Claims 1 to 11, further comprising talc or other conventional filler material.

13. A thermoplastic olefin nanocomposite composition, comprising the polypropylene nanocomposite composition as claimed in any one of claims 1 to 12, and a thermoplastic elastomer phase interdispersed with the maleated polypropylene polymer phase.

14. An article of manufacture, comprising: an object formed of the composition of Claims 1-13.

15. The article of manufacture of Claim 14, wherein the object is a motor vehicle part.

16. A process for producing a polypropylene nanocomposite composition, comprising the steps of:
(a) mixing a softened or melted polypropylene polymer with an organic peroxide and maleic. anhydride to form a maleated polypropylene polymer; and
(b) mixing the maleated polypropylene polymer with an onium treated cation exchanging layered silicate material to form a maleated polypropylene nanocomposite, the process
**characterized by** the maleated polypropylene polymer having a weight average molecular weight greater than 100,000.

17. A process for producing a thermoplastic olefin nanocomposite composition, comprising the steps of :
forming a polypropylene nanocomposite composition of as claimed in Claim 16; and
mixing the maleated polypropylene nanocomposite with a thermoplastic elastomer.

## Patentansprüche

1. Polypropylen-Nanokomposit-Zusammensetzung, die Folgendes umfasst:
(a) maleiniertes Polypropylen-Polymer mit einem gewichtsmittleren Molekulargewicht von mehr als 100.000;
(b) ein kationenaustauschendes geschichtetes Silicat-Material, das im maleinierten Polypropylen dispergiert ist, so dass mehr als die Hälfte des kationenaustauschenden geschichteten Silicat-Materials bei Untersuchung mit einem Elektronenmikroskop als Einheiten mit einer, zwei, drei, vier oder fünf Schichten vorliegt.

2. Zusammensetzung nach Anspruch 1, wobei der Gewichtsanteil des kationenaustauschenden geschichteten Silicat-Materials in der Zusammensetzung mehr als ein Prozent und weniger als dreißig Prozent beträgt.

3. Zusammensetzung nach Anspruch 1, wobei der Gewichtsanteil des kationenaustauschenden geschichteten Silicat-Materials in der Zusammensetzung mehr als drei Prozent der Zusammensetzung und weniger als zwölf Prozent der Zusammensetzung ausmacht.

4. Zusammensetzung nach Anspruch 1, 2 oder 3, wobei das gewichtsmittlere Molekulargewicht des maleinierten Polypropylen-Polymers mehr als 125.000 beträgt.

5. Zusammensetzung nach Anspruch 1, 2 oder 3, wobei das gewichtsmittlere Molekulargewicht des maleinierten Polypropylen-Polymers mehr als 150.000 beträgt.

6. Zusammensetzung nach Anspruch 1, 2 oder 3, wobei das gewichtsmittlere Molekulargewicht des maleinierten Polypropylen-Polymers mehr als 250.000 beträgt.

7. Zusammensetzung nach den Ansprüchen 1 bis 6, wobei es sich bei dem maleinierten Polypropylen-Polymer um ein maleiniertes Polypropylen hoher Kristallinität handelt, wobei die Schmelzwärme der Kristalliten des maleinierten Polypropylen-Polymers mehr als 85 Joule pro Gramm beträgt.

8. Zusammensetzung nach den Ansprüchen 1 bis 7, die weiterhin im maleinierten Polypropylen-Polymer nichtmaleiniertes Polypropylen umfasst, wobei das nichtmaleinierte Polypropylen ein gewichtsmittleres Molekulargewicht von mehr als 100.000 aufweist.

9. Zusammensetzung nach Anspruch 8, wobei es sich bei dem nicht-maleinierten Polypropylen um ein nichtmaleiniertes Polypropylen hoher Kristallinität handelt, wobei die Schmelzwärme der Kristalliten des nicht-maleinierten Polypropylens mehr als 85 Joule pro Gramm beträgt.

10. Zusammensetzung nach den Ansprüchen 1 bis 9, wobei die Phase von maleiniertem Polypropylen-Polymer im Wesentlichen frei von maleiniertem Polypropylen-Oligomer ist.

11. Zusammensetzung nach den Ansprüchen 1 bis 10, wobei die durch den Kerbschlagversuch bestimmte Schlagzähigkeit der Zusammensetzung bei null Grad Celsius im Vergleich zu einer bis auf die Tatsache, dass das gewichtsmittlere Molekulargewicht des maleinierten Polypropylen-Polymers weniger als 100.000 beträgt, identischen Zusammensetzung um mehr als fünfzig Prozent erhöht ist.

12. Zusammensetzung nach den Ansprüchen 1 bis 11, die weiterhin Talkum oder anderen üblichen Füllstoff umfasst.

13. Thermoplastische Olefin-Nanokomposit-Zusammensetzung, welche die Polypropylen-Nanokomposit-Zusammensetzung nach einem der Ansprüche 1 bis 12 und eine Phase von thermoplastischem Elastomer, die mit der Phase von maleiniertem Polypropylen-Polymer zwischendispergiert ist, umfasst.

14. Herstellungsgegenstand, der ein aus der Zusammensetzung nach den Ansprüchen 1 - 13 geformtes Objekt umfasst.

15. Herstellungsgegenstand nach Anspruch 14, wobei es sich bei dem Objekt um ein Kraftfahrzeugbauteil handelt.

16. Verfahren zur Herstellung einer Polypropylen-Nanokomposit-Zusammensetzung, das die folgenden Schritte umfasst:
(a) Mischen eines erweichten oder geschmolzenen Polypropylen-Polymers mit einem organischen Peroxid und Maleinsäureanhydrid, um ein maleiniertes Polypropylen-Polymer zu formen; und
(b) Mischen des maleinierten Polypropylen-Polymers mit einem mit Onium behandelten kationenaustauschenden geschichteten Silicat-Material, um ein maleiniertes Polypropylen-Nanokomposit zu formen, wobei das Verfahren **dadurch gekennzeichnet ist, dass** das maleinierte Polypropylen-Polymer ein gewichtsmittleres Molekulargewicht von mehr als 100.000 aufweist.

17. Verfahren zur Herstellung einer thermoplastischen Olefin-Nanokomposit-Zusammensetzung, das die folgenden Schritte umfasst:
Formen einer Polypropylen-Nanokomposit-Zusammensetzung nach Anspruch 16; und
Mischen des maleinierten Polypropylen-Nanokomposits mit einem thermoplastischen Elastomer.

## Revendications

1. Nanocomposite à base de polypropylène, qui comprend :
(a) un polypropylène maléaté, ayant une masse moléculaire moyenne en poids supérieure à 100 000,
(b) un silicate stratifié, échangeur de cations, qui est dispersé dans le polypropylène maléaté de telle manière que plus de la moitié du silicate stratifié, échangeur de cations, est présent sous la forme d'éléments en une couche, deux couches, trois couches, quatre couches ou cinq couches d'après l'examen par microscopie électronique.

2. Nanocomposite selon la revendication 1, dans lequel le pourcentage en poids du silicate stratifié, échangeur de cations, est supérieur à 1 % et inférieur à 30 %.

3. Nanocomposite selon la revendication 1, dans lequel le pourcentage en poids du silicate stratifié, échangeur de cations, est supérieur à 3 % du nanocomposite et inférieur à 12 % du nanocomposite.

4. Nanocomposite selon l'une quelconque des revendications 1 à 3, pour lequel la masse moléculaire moyenne en poids du polypropylène maléaté est supérieure à 125 000.

5. Nanocomposite selon l'une quelconque des revendications 1 à 3, pour lequel la masse moléculaire moyenne en poids du polypropylène maléaté est supérieure à 150 000.

6. Nanocomposite selon l'une quelconque des revendications 1 à 3, pour lequel la masse moléculaire moyenne en poids du polypropylène maléaté est supérieure à 250 000.

7. Nanocomposite selon l'une quelconque des revendications 1 à 6, dont le polypropylène maléaté est un polypropylène maléaté de cristallinité élevée, la chaleur de fusion des cristallites du polypropylène maléaté étant supérieure à 85 joules/g.

8. Nanocomposite selon l'une quelconque des revendications 1 à 7, qui comprend en outre du polypropylène non-maléaté, présent dans le polypropylène maléaté, le polypropylène non-maléaté ayant une masse moléculaire moyenne en poids supérieure à 100 000.

9. Nanocomposite selon la revendication 8, dont le polypropylène non-maléaté est un polypropylène non-maléaté de cristallinité élevée, pour lequel la chaleur de fusion des cristallites du polypropylène non-maléaté est supérieure à 85 joules/g.

10. Nanocomposite selon l'une quelconque des revendications 1 à 9, pour lequel la phase de polypropylène maléaté est pratiquement exempte d'oligomère polypropylène maléaté.

11. Nanocomposite selon l'une quelconque des revendications 1 à 10, pour lequel la résistance au choc à 0 °C, mesurée dans le test IZOD sur barreau entaillé, est augmentée de plus de 50 % par rapport à celle d'un nanocomposite de même composition à cela près que la masse moléculaire moyenne en poids du polypropylène maléaté est inférieure à 100 000.

12. Nanocomposite selon l'une quelconque des revendications 1 à 11, qui renferme en outre du talc ou d'autres charges classiques.

13. Nanocomposite à base d'oléfine thermoplastique, qui comprend le nanocomposite à base de polypropylène selon l'une quelconque des revendications 1 à 12, et une phase élastomère thermoplastique, mélangée avec la phase de polypropylène maléaté.

14. Article manufacturé qui comprend un objet constitué du nanocomposite selon l'une quelconque des revendications 1 à 13.

15. Article manufacturé selon la revendication 14, pour lequel l'objet est une partie de véhicule à moteur.

16. Procédé de production d'un nanocomposite à base de polypropylène, qui comprend les étapes consistant à :
(a) mélanger un polypropylène ramolli ou fondu avec un peroxyde organique et de l'anhydride maléique pour former un polypropylène maléaté, et
(b) mélanger le polypropylène maléaté avec un silicate stratifié, échangeur de cations, traité par un composé onium, pour former un nanocomposite à base de polypropylène maléaté,
procédé **caractérisé en ce que** le polypropylène maléaté a une masse moléculaire moyenne en poids supérieure à 100 000.

17. Procédé de production d'un nanocomposite à base d'oléfine thermoplastique, qui comprend les étapes consistant à :
former un nanocomposite à base de polypropylène comme cela est indiqué dans la revendication 16, et
mélanger le nanocomposite à base de polypropylène maléaté avec un élastomère thermoplastique.
